# EUROPÄISCHE PATENTSCHRIFT

(11) **EP 3 751 184 B1**
(45) Veröffentlichungstag und Bekanntmachung des Hinweises auf die Patenterteilung: **30.03.2022**
(21) Anmeldenummer: 20178991.4
(22) Anmeldetag: 09.06.2020
(51) Int. Cl.: F16L 1/028, F16L 1/032, F16L 1/06, F16L 55/165, B65G 25/08, B65G 47/86, B65G 47/90

(54) **VORRICHTUNG ZUM EINSCHIEBEN EINES ROHRS IN EINEN LÄNGLICHEN HOHLRAUM**
DEVICE FOR INSERTING A TUBE INTO AN ELONGATED CAVITY
DISPOSITIF D'INTRODUCTION D'UN TUYAU DANS UNE CAVITÉ ALLONGÉE

(30) Priorität: 14.06.2019 DE 102019004171
(43) Veröffentlichungstag der Anmeldung: 16.12.2020
(73) Patentinhaber: TRACTO-TECHNIK GmbH & Co. KG, 57368 Lennestadt (DE)
(72) Erfinder: KOCH, Elmar, 59889 Eslohe (DE); KÖPER, Martin, 57439 Attendorn (DE); JOSTES, Lucas, 57413 Finnentrop (DE); HERMES, Stefan, 57368 Lennestadt (DE)
(74) Vertreter: Verhasselt, Jörn

(56) Entgegenhaltungen:
- DE-A1-102006 030 802
- GB-A- 2 227 543
- US-A- 968 022
- US-A- 3 580 448
- US-A- 4 685 831
- US-A1- 2017 009 908

## Beschreibung

Die Erfindung betrifft eine Vorrichtung zum Einschieben eines Rohrs in einen länglichen Hohlraum.

Im Bereich von Rohrsanierungen ist es üblich, neue Leitungen oder Rohre in alte bestehende Leitungen oder Rohre einzuziehen. Es ist möglich, dass die alte bestehende Leitung bzw. das alte bestehende Rohr zerstört bzw. aufgeweitet und eine neue Leitung bzw. ein neues Rohr eingebracht wird. Das vorgenannte Verfahren mit einer Zerstörung des alten Rohrs bzw. der alten Leitung wird als "Berstlining" bezeichnet. Es ist alternativ auch möglich, auf das Berstlining zu verzichten und unter einer gewissen Querschnittreduktion die neue Leitung bzw. das neue Rohr in die alte bestehende Leitung bzw. das alte bestehende Rohr einzuziehen ("Relining-Technik").

Gerade im innerstädtischen Bereich ist die Belegungsdichte im Untergrund sehr hoch, so dass die alten Leitungen bzw. Rohre zum einen durch Schlauchsanierungsmaßnahmen ertüchtigt werden oder zum anderen neue Leitungen bzw. Rohre, insbesondere aus Polyethylen, eingezogen werden. Der Schlauch bzw. die Rohre sind hinsichtlich der Außenabmessung so gewählt, dass sie in die vorhandene Leitung bzw. in das vorhandene Rohr eingezogen bzw. eingeschoben werden können.

Das Einschieben eines neuen Rohrs in ein vorhandenes Rohr bzw. Leitung ist gerade im Gasnetzbereich stark verbreitet. Leitungen des Gasnetzbereichs sind noch aus alten Gussleitungen gefertigt, sodass zunehmend Undichtigkeiten auftreten und daher eine flächendeckende Sanierung mit dem Einschieben von neuen Leitungen in die alte Leitung mittels der oben skizzierten "Relining-Technik" durchgeführt werden.

Während man früher Leitungen sowohl schiebend als auch ziehend in bestehende alte Leitungen eingebracht hat, wird nunmehr fast nur noch das Einschieben durchgeführt, da früher beim Ziehen der Leitung in die alte bestehende Leitung oft Überdehnungen der neuen Leitung aufgetreten sind, die zu einer Beeinträchtigung der neuen Leitung bzw. des neuen Rohrs führen konnten.

Zum Einschieben eines Rohrs zum Zwecke des "Relining" ist es bekannt eine Leitung bzw. ein Rohr mittels einer an einem Bagger angebauten Greifeinrichtung in eine bestehende Leitung bzw. in ein bestehendes Rohr einzuschieben. Nachteilig ist dabei, dass durch den Bagger ein Zugriff von oben in das Erdreich notwendig ist, der eine große Baugrube erforderlich macht. Ferner ist ein gewisses Geschick des Baggerführers erforderlich, um das Rohr bzw. die Leitung ohne Komplikation in die bestehende Leitung einzuschieben.

Es sind auch lineararbeitende Rohreinschubvorrichtungen bekannt, bei denen ein Zylinder ein und aus fährt und das neue Rohr mittels eines Greifarms gehalten und durch die Bewegung des Zylinders in das alte Rohr eingeschoben wird. Es hat sich gezeigt, dass die Kontaktfläche des Greifers mit dem neuen Rohr meist sehr gering ist, sodass dabei nur geringe Kräfte übertragen werden können, bzw. - wenn größere Kräfte aufgebracht werden - es sehr schnell zu einer Beschädigung des neuen Rohrs kommen kann. Ferner ist auch hier eine relativ große Baugrube erforderlich.

Es ist auch bekannt, einen Rohreinschub mittels zweier das Rohr kontaktierender endloser Transport- oder Förderbänder oder -ketten durchzuführen. Das neue Rohr wird dabei zwischen einem oberen und einem unteren Transportband eingespannt. Die beiden Transportbänder werden gegenläufig angetrieben und das eingespannte neue Rohr wird in das Altrohr eingeschoben. Hierbei ist ein großer operativer und maschineller Aufwand nötig, wobei die das neue Rohr kontaktierenden Transportbänder auch im Bereich einer großen Baugrube positioniert werden müssen.

Den bisher bekannten Verfahren zum Einschieben eines Rohrs in eine bestehende alte Leitung ist eine relativ große Baugrube gemein. Hierdurch werden die Baukosten für die Erstellung der Baugrube und insbesondere die anschließende Wiederherstellung der Oberfläche sehr teuer. Weiterhin ist es aufgrund der baulichen Situation vor Ort nicht immer möglich, eine entsprechende Baugrube zu erstellen. Hierdurch ergibt sich meist ein erhöhter Planungsaufwand, um die geeignete Position für die Baugrube zu finden. Aber selbst bei sorgfältiger Planung wird vor Ort meist festgestellt, dass aufgrund von nicht kartierten Einbauten im Untergrund die Baugrube wie geplant nicht erstellt werden kann. Relevante Vorrichtungen aus dem Stand der Technik offenbaren folgende Publikationen: GB 2 227 543 A, DE 10 2006 030802 A1, US 968 022 A, US 3 580 448 A, US 4 685 831 A und US 2017/009908 A.

Aufgabe ist es daher, für einen Rohreinschub eine möglichst kleine Baugrube zu ermöglichen, bei der trotzdem ein sicherer Einschub mit einer möglichst geringen Belastung des Rohrs gegeben ist.

Die Aufgabe wird gemäß dem Gegenstand der unabhängigen Patentansprüche gelöst.

Vorteilhafte Ausführungsformen sind Gegenstand jeweiliger Unteransprüche und der Beschreibung.

Kerngedanke der Erfindung ist es mindestens zwei Rohrgreifer zu verwenden, die sich entlang einer als zumindest abschnittsweise gekrümmte Bahn ausgestalteten Kurvenbahn bewegen und das Rohr während der Bewegung greifen, wobei die Bewegung der Rohrgreifer mittels der Kurvenbahn vorbestimmt ist und das Rohr während des Greifens und Bewegens zumindest abschnittsweise gekrümmt wird bzw. ist. Das Rohr kann somit über einen bestimmten Bereich (d.h. im Wesentlichen dem gekrümmten Bereich) hinsichtlich seiner Erstreckung in einer Richtung verringert werden, insbesondere im Bereich einer Baugrube, und dabei vorgeschoben und letztendlich in den Hohlraum eingeschoben werden. Mittels der Kurvenbahn und der damit einhergehenden Führung mit den Rohrgreifern ist eine Krümmung des Rohrs möglich, bei der eine Krümmungsachse quer zur Längsachse des Hohlraumanfangs ausgerichtet sein kann. Hierdurch kann eine Krümmung erreicht werden, mit der eine kleine Baugrube zum Anordnen der Vorrichtung darin ausreicht, um das Rohr in den Hohlraum einzuschieben. Insbesondere kann mittels der Rohrgreifer, die dem Rohr die Krümmung aufprägen auch die Einschubkraft aufgebracht werden. Die Einschubkraft kann entlang des gekrümmten Rohrs eingebacht werden. Es kann insbesondere darauf geachtet werden, dass Radien und Kräfte zum Greifen bzw. Fassen des Rohrs an das Material und/oder den Umfang des Rohrs angepasst werden. Das Rohr kann entlang eines definierten Biegeradius umgelenkt und kontinuierlich in den Hohlraum eingeschoben werden. Durch das sichere Halten kann ein Ausknicken des Rohres verursacht durch die eingeleitete Schubkraft verhindert werden.

Die Erfindung schafft eine Vorrichtung zum Einschieben eines Rohrs in einen länglichen Hohlraum. Die Vorrichtung weist mindestens zwei entlang einer Kurvenbahn bewegbare Rohrgreifer auf, die derart angeordnet und ausgestaltet sind, das Rohr zumindest abschnittsweise zu umgreifen und im gegriffenen Zustand zumindest abschnittsweise gekrümmt zu bewegen.

Es hat sich herausgestellt, dass mit der vorgenannten Vorrichtung gerade auch ein Einsatz in der sogenannten Keyhole-Technik möglich ist. Der Durchmesser einer Baugrube in der sogenannten Keyhole-Technik beträgt ungefähr 0,6m. Zwar ist eine derartige Baugrube noch nicht für die Vorrichtung ausreichend, aber ein sogenanntes Triple-Keyhole, bei dem sich durch die Überlappung dreier Keyholes eine Gesamtlänge von nur 1,5m ergibt, kann ausreichend sein. Die einzelnen Keyholes bilden dabei drei überlappend angeordnete kreisrunde Öffnungen der Oberfläche. Hierdurch kann die Baugrube sehr klein gehalten werden, sodass die in Anspruch genommene Fläche nur sehr gering ist und somit die Störungen, insbesondere für den laufenden Verkehr, auf ein Minimum reduziert werden können. Des Weiteren können die zuvor ausgeschnittenen Kerne aus der Oberfläche nach Abschluss der Bauarbeiten im Zuge der Wiederherstellung der Oberfläche wieder eingeklebt werden. Hierdurch können jegliche Asphaltarbeiten entfallen, sodass eine signifikante Kosteneinsparung bei den Bauarbeiten möglich ist.

Untersuchungen der Erfinder haben gezeigt, dass selbst bei größeren Rohrdurchmessern von bis zu 125mm eine Startgrube von 1,5m Länge ausreichend sein kann. Bei Rohren mit kleinerem Durchmesser sind sogar Startgruben mit einer noch kürzeren Länge erreichbar.

Es ergibt sich ein Mehrwert für die Anwender der Erfindung, da eine kleine Baugrube verwendet werden kann, die einfacher planbar ist und auch mit weniger Aufwand als eine große Baugrube wieder verfüllt werden kann. Gleichzeitig ist mit der Vorrichtung ein sicherer Einschub des Rohres möglich. Die Vorrichtung vereint die Funktion einer definierten Rohrführung/Krümmung des Rohrs mit der Übertragung einer Schubkraft auf das Rohr. Alle Rohre - gleich welchen Durchmessers - können eine nur kurzzeitige Krümmung erfahren, so dass am Rohr selbst keine Beeinträchtigung hinsichtlich Steifigkeit und Druckfestigkeit zu erwarten sind.

Die Erfinder haben erkannt, dass mit der erfindungsgemäßen Vorrichtung eine Einschubkraft in Höhe von 15 kN oder mehr möglich ist. Diese Kräfte reichen aus, um ein Rohr über weite Strecken in einen bestehenden länglichen Hohlraum einzuschieben, da ein kontinuierliches Einschieben ermöglicht wird, so dass im Gegensatz zum diskontinuierlichen Einschieben bei getakteten Verfahren keine Haftreibung immer wieder neu überwunden werden muss.

Der Begriff "Rohr" umfasst im Sinne der Beschreibung jedwedes längliche Element, welches als Hohlkörper oder als teilweise gefüllter Körper in eine bestehende Leitung bzw. ein bestehendes Rohr, insbesondere zum Zwecke des "Relining", eingebracht werden kann. Im Sinne der Beschreibung umfasst der Begriff Rohr damit einen länglichen Hohlkörper, bei dem insbesondere in der Regel die Länge wesentlich größer als der Durchmesser ist. Bei einem Rohr kann es sich im Sinne der Beschreibung aber auch um eine Leitung handeln, bei dem in dem Hohlraum eine oder mehrere weitere Leitungen bzw. Rohre vorhanden sein können. Die in dem Hohlraum des Rohrs bzw. der Leitung vorhandenen Leitungen oder Rohre können beispielsweise elektrische Leitungen oder Kabel, aber auch weitere Rohre oder Leitungen, sein. Jedwelches Kunststoffmaterial, aus dem krümmbare Rohre hergestellt werden können, beispielsweise auch ein verstärkter Kunststoffe, kann für das Rohr verwendet werden.

Im Sinne der Beschreibung umfasst der Begriff "länglicher Hohlraum" einen Hohlraum, der insbesondere mittels der "Relining-Technik" saniert werden kann und ist insbesondere als Rohr oder Leitung ausgestaltet, wobei der Hohlraum eine intakte oder schadhafte Wandung aufweisen kann. Der längliche Hohlraum ist insbesondere im Erdreich angeordnet.

Der Begriff "Erdreich" im Sinne der vorliegenden Umschreibung umfasst jede Art von Material, insbesondere Erde, Sand, Fels und/oder Stein, in welchem ein bestehender länglicher Hohlraum ausgebildet ist. Insbesondere umfasst der Begriff Erdreich das Erdreich, in dem ein Rohr oder eine Leitung zum Zwecke der Ver- und/oder Entsorgung angeordnet ist. Insbesondere ist ein Rohr oder eine Leitung zum Ver- und/oder Entsorgen ein Rohr oder eine Leitung innerhalb eines Gas-, Wasser-, Kommunikations-, Medien- oder Stromleitungsnetzes.

Der Begriff "Kurvenbahn" im Sinne der Beschreibung umfasst ein Vorhandensein eines konstruktiven Elements in Form eines Trägers, einer Kulisse, einer Schiene und/oder einer Unterstützung oder ähnlichem, mittels derer die Rohrgreifer entlang einer zumindest abschnittsweise gekrümmten Bahn bewegt werden können. Die Kurvenbahn umfasst dabei eine zumindest abschnittsweise gekrümmte Bahn, die nicht linear verläuft. Der Begriff "zumindest abschnittsweise gekrümmt" wird verwendet, um auch die Möglichkeit zu erfassen, dass ein linearer Anteil vorhanden sein kann; wesentlich ist aber die zumindest in einem Abschnitt vorliegende Krümmung als Teil der Kurvenbahn. Damit kann die Kurvenbahn eine Raumkurve bzw. den Verlauf einer Raumkurve vorgeben, entlang derer die Rohrgreifer bewegt werden.

Im Wesentlichen sind für die Kurvenbahn zwei Ausgestaltungen möglich. Gemäß einer ersten Ausgestaltung können sich die Rohrgreifer entlang bzw. relativ an bzw. zu einem, insbesondere radförmigen, Träger, einer Kulisse, einer Schiene, einer Unterstützung oder ähnlichem bewegen, welcher bzw. welche einen Verlauf der Kurvenbahn vorgibt (Alternative a). Gemäß einer weiteren Ausgestaltung können die Rohrgreifer an einem sich bewegenden bzw. sich um mindestens eine Achse drehenden, insbesondere radförmigen, Träger, Kulisse, Schiene, Unterstützung oder ähnlichem befestigt sein (Alternative b).

Der Träger oder ähnliches kann eine insbesondere als Umfangsfläche ausgestaltete Fläche aufweisen, die gekrümmt ist und an der die Rohrgreifer sich bewegen bzw. ablaufen können (Alternative a) oder an der die Rohrgreifer befestigt sind (Alternative b). Mischformen der beiden genannten Alternativen sind möglich.

Für eine besonders einfach ausgestaltete Ausführungsform kann es bevorzugt sein, die mindestens zwei Rohrgreifer an einer gekrümmten Oberfläche im Raum zu befestigen und die gekrümmte Oberfläche im Raum zu drehen. Die gekrümmte Oberfläche kann insbesondere ein Kreis sein bzw. kreisförmig ausgestaltet sein, so dass die Rohrgreifer wie an einem Rad mit nach außen gerichtet angeordnet sein können. Die Rohrgreifer können zusammen mit dem Rad bewegt werden. Die Ausführungsform ist deswegen bevorzugt, da eine gleichförmige und runde Bewegung der Rohrgreifer durchgeführt werden kann. Die Bewegung der Rohrgreifer mit einem Rad kann als sehr stabile Bewegung ausgeführt werden.

Die Kurvenbahn kann zumindest abschnittsweise Krümmungsradien aufweisen, sodass die Kurvenbahn zumindest abschnittsweise kreisbogensegmentförmig ausgestaltet ist. Hierdurch kann eine gleichmäßige Krümmung auf das Rohr aufgeprägt werden. Die Kurvenbahn kann auch zumindest abschnittsweise ein Segment eines Ellipsenbogens aufweisen. Es sind beliebige gekrümmte Formen möglich, solange die Kurvenbahn im Wesentlichen stetig, d.h. im Wesentlichen ohne Sprünge und/oder Versatze, verläuft.

Die Kurvenbahn im Sinne der Beschreibung ist für eine vereinfachte Ausgestaltung in sich geschlossen, um die Rohrgreifer endlos führen zu können. Die Kurvenbahn kann die Bewegung der Rohrgreifer auf einer gekrümmten Bahn definieren. Die Kurvenbahn kann im Wesentlichen eine Bewegung der Rohrgreifer in einer Ebene vorgeben. Die Kurvenbahn ist in einer Ebene, insbesondere im Wesentlichen in nur einer Ebene ausgestaltet. Hierdurch wird der für die Vorrichtung notwendige Raum weiter gering gehalten und die Einwirkung auf das Rohr reduziert. So ist nicht nur die Reduzierung in einer Ebene, in der die Krümmung ausgebildet ist, gering, sondern auch in der Ebene quer zur Krümmung.

Die Rohrgreifer können auf einer in sich geschlossenen Kurvenbahn umlaufen. Die Kurvenbahn kann einen Ringschluss haben. Die Rohrgreifer können wiederholt entlang der Kurvenbahn in einer Richtung geführt werden, wodurch die Rohrgreifer die Kurvenbahn in einer Richtung wiederholt durchlaufen bzw. durchfahren können. Die Rohrgreifer können sich entlang der Kurvenbahn kontinuierlich bewegen, d. h. ohne eine Bewegungsumkehr bei der Einbringung des Rohrs in den Hohlraum.

Die Kurvenbahn kann derart ausgestaltet sein, dass ein definierter Biegeradius für das Rohr nicht unterschritten wird. Beispielsweise kann die Kurvenbahn als kleinsten Radius 0,6 m aufweisen, sodass mit der Rohrgreifer, der an dieser Bahn umläuft und das Rohr greift ein Radius für das Rohr sich ergibt von 0,7 m. Abhängig vom Außendurchmesser des Rohres sind auch andere Radien für die Kurvenbahn und damit auch für das Rohr selbst möglich.

Der Begriff "Rohrgreifer" umfasst im Sinne der Beschreibung ein konstruktives Element der Vorrichtung zum Einschieben eines Rohrs, mit dem das einzuschiebende Rohr gefasst bzw. gegriffen wird, um das gegriffene Rohr zu bewegen. Der Rohrgreifer kann das Rohr mittels Form- und/oder Reibschluss kontaktieren bzw. greifen. Sofern in der Beschreibung der Begriff "zumindest abschnittsweise umgreifen" gewählt ist, so wird hierunter verstanden, dass es zur Ausbildung eines Form- und/oder Reibschlusses ausreichend ist, dass das Rohr in einem Teilbereich seines Umfangs gegriffen bzw. kontaktiert wird. Dem einzuschiebenden gegriffenen Rohr kann mittels des Rohrgreifers eine Kraft aufgeprägt werden, wenn sich der Rohrgreifer bewegt. Hierzu umgreift der Rohrgreifer zumindest abschnittsweise über einen Zeitraum das Rohr und bewegt im gegriffenen Zustand das Rohr entlang einer Bahn. Aufgrund des Vorhandenseins von mindestens zwei Rohrgreifern, die auf einer Kurvenbahn bewegt werden und hintereinander, insbesondere benachbart, bezogen auf die Bewegung entlang der Kurvenbahn angeordnet sind, kann das Rohr auf einer gekrümmten Bahn bewegt werden, wenn die beiden Rohrgreifer das Rohr gegriffen und gemäß der Kurvenbahn auf einer nichtlinearen Bahn bewegt werden.

Der in der Beschreibung verwendete Begriff "im gegriffenen Zustand zumindest abschnittsweise gekrümmt zu bewegen" umfasst die Möglichkeit, dass das Rohr auch in einem Abschnitt linear bewegt werden kann, aber es ist mindestens ein Abschnitt vorhanden, in dem das Rohr gekrümmt bewegt wird.

Im einfachsten Fall kann die Bahn, entlang der das Rohr bewegt wird, im Wesentlichen durch einen Abschnitt der Kurvenbahn, in der die Rohrgreifer das Rohr greifen, beschrieben werden bzw. parallel versetzt zu dieser verlaufen. Das Rohr folgt damit im Wesentlichen der Kurvenbahn, entlang derer sich die Rohrgreifer, die das Rohr greifen, bewegen. Neben dem parallelen Versatz zwischen der Kurvenbahn und dem Rohr, der dadurch entsteht, dass die Rohrgreifer, insbesondere endseitig, an der Kurvenbahn ablaufen (Alternative a) bzw. an einer Kurvenbahn befestigt sind sowie sich mit dieser bewegen (Alternative b) und mit dem anderen Ende das Rohr umgreifen, kann auch der Rohrgreifer gegenüber der Kurvenbahn eine translatorische Bewegung beim Umlauf auf der Kurvenbahn ausführen. Beispielsweise kann der Rohrgreifer gegenüber der Kurvenbahn radial bzw. quer zur Kurvenbahn bewegt werden. Es kann auch vorgesehen sein, dass der Rohrgreifer entlang der Kurvenbahn um eine hierzu parallele Achse kippen kann.

Die Kurvenbahn kann mittels eines Gestells in der Baugrube platziert sein, um die Kurvenbahn sicher abzustützen. Hierzu kann eine Aufstandsfläche, eine oder zwei stirnseitige seitliche Abstützfläche(n), die im Wesentlichen parallel versetzt zu einer Krümmungsachse der Kurvenbahn verlaufen kann bzw. können, und/oder eine oder zwei seitliche Abstützfläche(n), die von einer Krümmungsachse der Kurvenbahn geschnitten werden kann bzw. können, vorgesehen sein.

Da sich mit der Anzahl der Rohrgreifer die Klemmkraft bzw. Kraft zum Einschieben des Rohrs, d.h. die Einschubkraft, erhöht, sind bevorzugt mehr als zwei Rohrgreifer vorhanden, insbesondere drei, vier, fünf, sechs, sieben usw. Es kann jede ganzzahlige Anzahl von Rohrgreifern vorgesehen sein, wobei neben der Kontaktfläche zum Kontaktieren des Rohrs auch die Möglichkeit berücksichtigt werden kann, dass mit einer zunehmenden Zahl an Rohrgreifern entlang einer Kurvenbahn die Möglichkeit erhöht wird, dass das Rohr präziser entlang der Kurvenbahn bewegt werden kann. Es ist bevorzugt, dass die gesamte Kurvenbahn im Wesentlichen entlang ihrer gesamten Länge mit Rohrgreifern besetzt ist, sodass neben einer Erhöhung der Klemmkraft bzw. Einschubkraft auch ein möglichst kontinuierliches Führen des einzuschiebenden Rohrs entlang der Kurvenbahn möglich ist. Je höher die Anzahl der Rohrgreifer auf der Kurvenbahn ist, desto besser kann das gegriffene Rohr die Form der Kurvenbahn nachbilden.

Es ist offensichtlich, dass die Rohrgreifer einer Kurvenbahn nicht alle gleichzeitig ein Rohr umgreifen können bzw. müssen. Vielmehr sind einige der Rohrgreifer insbesondere auf einer geschlossenen Kurvenbahn nicht in Kontakt mit dem Rohr sondern laufen von einem Winkelbereich, in dem diese das Rohr umgriffen hatten und eine Einschubkraft auf das Rohr aufgebracht haben, in einem Winkelbereich ohne Kontakt mit dem Rohr, um insbesondere wieder in den Winkelbereich zu gelangen, um das Rohr wieder zu umgreifen und einzuschieben. Ein Winkelbereich der Kurvenbahn, in dem sich die Rohrgreifer in Schließstellung befinden, kann von einem Winkelbereich der Kurvenbahn eingerahmt werden, in dem sich die Rohrgreifer in Offenstellung befinden. In einer bevorzugten Ausführungsform ergeben der Winkelbereich der Schließstellung und der Winkelbereich der Offenstellung die gesamte Kurvenbahn. Es kann auch möglich sein, dass die Rohrgreifer in einem Winkelbereich, in dem kein Rohr gegriffen wird, dennoch in einer Schließstellung sind. Dies kann beispielsweise deswegen vorliegen, da insbesondere, wenn die Schließstellung mittels einer Federspannung erreicht wird, sich die Federn der betroffenen Rohrgreifer entspannen. Dadurch können die Federkräfte gegenüber bei geöffneten Rohrgreifern erzeugten Kräften verringert werden.

Vorzugsweise weist mindestens einer der Rohrgreifer mindestens eine Klemmbacke auf, die relativ zu einem Gegenelement oder einer weiteren Klemmbacke bewegbar ist. Hierdurch kann der Rohrgreifer das Rohr sicher greifen. Ferner wird mittels der Bewegung der Rohrgreifer entlang der Kurvenbahn der Rohrgreifer von einer Offenstellung, in der das Rohr freigegeben ist, in eine Schließstellung, in der das Rohr gegriffen ist, überführt. Durch die Bewegung der Klemmbacke ist demnach eine Stellung möglich, in der das Rohr freigegeben ist und eine Stellung, in der das Rohr gegriffen ist. Sofern mindestens eine Klemmbacke vorhanden ist und ein Gegenelement, kann das Gegenelement im Raum oder entlang der Kurvenbahn fixiert bzw. feststehend ausgebildet sein. Hierdurch ist eine besonders einfache Ausgestaltung möglich. Alternativ oder zusätzlich kann vorgesehen sein, dass zwei Klemmbacken vorgesehen sind, die ihrerseits beide beweglich zueinander ausgestaltet sind. Beide Klemmbacken können sich relativ zur Kurvenbahn zur Ausübung der Schließ- oder Offenstellung bewegen. Die Offenstellung dient dazu, dass das Rohr in den Rohrgreifer einlaufen kann. Die Schließstellung dient dazu, dass das Rohr vom Rohrgreifer geschoben werden kann. Die Schließ- und auch die Offenstellung kann sich über einen Winkelbereich der Kurvenbahn erstrecken.

Vorzugsweise ist die relative Bewegung der Klemmbacke zu dem Gegenelement bzw. der weiteren Klemmbacke zwischen der Schließstellung und der Offenstellung im Wesentlichen quer zur Bewegung des Rohrgreifers an der Kurvenbahn gerichtet. Der Einschub erfolgt damit quer zur Bewegungsrichtung der Klemmbacke, sodass eine Schubkraft durch die Bewegung der Rohrgreifer quer zur "Greifkraft" der Rohrgreifer aufgebracht wird.

Vorzugsweise weist die Klemmbacke eine Einformung auf, die mit dem Außenumfang des Rohrs korrespondiert. Hierdurch können Klemmbacken verwendet werden, die an unterschiedliche Rohrformen bzw. -durchmesser angepasst sind. Die Vorrichtung kann somit an unterschiedliche Rohrformen bzw. -durchmesser angepasst werden.

Die Klemmbacke bzw. die mehreren Klemmbacken können an einer Teilfläche, die mit dem Rohr in Berührung gelangt, d.h. insbesondere an der Kontaktfläche, zumindest abschnittsweise beschichtet sein, um eine Reibkraft zwischen Klemmbacke und Rohr zu erhöhen. Hierdurch kann das Rohr sicherer ergriffen werden und die Einschubkraft effizienter aufgebracht werden. Ferner können auch nasse oder beschmutzte Rohre besonders gut gegriffen werden.

In einer bevorzugten Ausführungsform ist der Rohrgreifer in Schließstellung vorbelastet. Hierdurch kann dem Rohrgreifer eine ständige Kraft aufgeprägt werden, die zu einem sicheren Umgreifen des Rohrs führen kann. Der Rohrgreifer kann beispielsweise mittels einer Federvorspannung in Schließstellung vorbelastet sein. Der Rohrgreifer kann aber auch mittels einer weiteren Kurvenbahn geschlossen werden, sodass der Rohrgreifer sowohl in Schließ- als auch in Offenstellung zwangsgeführt wird. Alternativ oder zusätzlich ist es möglich, dass der Rohrgreifer mittels eines Druckluftzylinders in Schließstellung vorbelastet ist. Alternativ oder zusätzlich kann der Rohrgreifer in Schließstellung mittels eines Hydraulikzylinders vorbelastet sein. Der Rohrgreifer kann auch alternativ oder zusätzlich mittels Magneten oder ähnlichem geschlossen werden. Zumindest bei der Vorbelastung des Rohrgreifers in Schließstellung mittels einer Federvorspannung kann der Rohrgreifer eine Laufrolle aufweisen, welche über einer an der Kurvenbahn ausgestalteten Schaltfläche abläuft, dass hierdurch eine Öffnung der Klemmbacke initiiert wird. Eine einfache Ausgestaltung des Öffnens und/oder Schließens ist möglich.

Vorzugsweise sind die Offenstellung und die Schließstellung der Rohrgreifer in Abhängigkeit der Position der Rohrgreifer an der Kurvenbahn gewählt, sodass eine Automatisierung bzw. ein automatischer Ablauf, in welcher Position der Rohrgreifer schließt und/oder öffnet schon durch die Kurvenbahn vorgegeben ist. Die Rohrgreifer können über einen Winkelbereich der Kurvenbahn, der insbesondere vorbestimmt sein kann, in einer Schließstellung sein und es gibt mindestens einen weiteren Winkelbereich der Kurvenbahn, der insbesondere vorbestimmt sein kann, in denen die Rohrgreifer in einer Offenstellung sein können.

Insbesondere kann mittels einer Schaltfläche auf den Rohrgreifer eingewirkt werden, um den Rohrgreifer in die Schließstellung bzw. die Offenstellung zu bringen. Es ist auch möglich, dass die Position mittels eines elektrischen Sensors oder eines elektrischen Positionsgebers erfasst wird und der Rohrgreifer entsprechend in eine Schließstellung oder Offenstellung gebracht wird. die Schaltfläche kann insbesondere gegenüber der Bewegung der Rohrgreifer im Raum feststehen.

Vorzugsweise ist eine als Kontaktfläche ausgestaltete Schaltfläche für den Rohrgreifer vorhanden, auf der die Rohrgreifer mit einer Laufrolle ablaufen können. Mittels einer Interaktion der Laufrolle mit einer Ausgestaltung der Kontaktfläche wird der Rohrgreifer von einer, insbesondere federvorgespannten, Schließstellung in eine Offenstellung gebracht. Hierdurch kann eine einfache Ausbildung einer, insbesondere federvorbelasteten, Schließstellung geschaffen werden, die mittels einer mechanischen Interaktion in eine Offenstellung überführt werden kann. Die Herstellung ist vereinfacht und die Ausführungsform wartungsarm. Hohe Laufzeiten sind erreichbar.

In einer bevorzugten Ausführungsform ist ein, insbesondere hydraulischer, Antrieb vorhanden. Hierdurch ist ein Antrieb möglich, mit dem hohe Kräfte zum Einschieben des Rohrs aufgebracht werden können. Zudem ist ein hydraulischer Antrieb bzw. Hydraulikantrieb auf dem Gebiet bekannt und wird oft eingesetzt. Ferner sind gleichförmige und exakte Bewegungen möglich. Insbesondere kann bei fest an der Kurvenbahn angeordneten Rohrgreifern in Form eines Rades ein, insbesondere hydraulischer Antrieb, im Zentrum der Achse sitzen und das Einschubrad drehen.

In einer bevorzugten Ausführungsform ist eine Eingangsführung und/oder Ausgangsführung für das Rohr vor bzw. hinter der Kurvenbahn bzw. den das Rohr umgreifenden Rohrgreifern bezogen auf die Offenstellung bzw. Schließstellung der Rohrgreifer vorhanden, wobei die Eingangsführung im Bereich der Rohrgreifer ist, die sich in Offenstellung befinden und die Ausgangsführung im Bereich der Rohrgreifer ist, die von einer Schließstellung in die Offenstellung überführt werden. Durch die Eingangs-und/oder Ausgangsführung ist eine zusätzliche Unterstützung des Rohrs, welches eingeschoben wird, möglich.

In einer bevorzugten Ausführungsform ist die Eingangsführung und/oder die Ausgangsführung gerade oder gekrümmt ausgestaltet. Hierdurch kann auf bestimmte Anforderungen reagiert werden. Beispielsweise kann im Bereich der Einführung schon durch eine Krümmung der Eingangsführung eine "vorgebogene" bzw. gekrümmte Form des Rohrs vorgegeben werden. Die Ausgangsführung kann neben der Unterstützung des Rohrs dazu vorgesehen sein, um das einzuschiebende Rohr möglichst gerade in das Erdreich zu schieben. Dazu kann die Ausgangsführung gerade oder leicht gekrümmt sein. Die leichte Krümmung kann beispielsweise in Gegenrichtung der durch die Rohrgreifer aufgeprägten Krümmung gerichtet sein. Eine mögliche Gegenrichtung der Krümmung der Ausgangsführung kann insbesondere zum Ausgleich der Restspannungen im Rohr vorgesehen sein. Die Eingangsführung und/oder Ausgangsführung kann in Form von einer Gleitschiene, Einführhülse, Rollenbahn, Gleitfläche oder ähnlichem ausgestaltet sein.

In einer bevorzugten Ausführungsform ist ein Schneidelement zwischen zwei benachbarten Rohrgreifern der Kurvenbahn derart bewegbar angeordnet, dass das Rohr zumindest abschnittsweise geschnitten werden kann. Das Schneidelement kann eine translatorische Bewegung in einer Richtung radial zur Kurvenbahn und/oder eine Bewegung in Umfangsrichtung des Rohrs ausführen. Es kann insbesondere eine Sperre mit einer Steuerung vorhanden sein, die eine Bewegung der Rohrgreifer unterbindet, wenn das Schneidelement bewegt wird und/oder es kann eine Sperre mit einer Steuerung vorhanden sein, die eine Bewegung des Schneidelements unterbindet, wenn die Rohrgreifer bewegt werden. Hierdurch kann ein Wechselspiel zwischen der Bewegung der Rohrgreifer und der Bewegung des Schneidelements erreicht werden, welche nur eine Bewegung der beiden zulässt. Wird eines der beiden Elemente, Rohrgreifer oder Schneidelement, bewegt, so kann sich das andere nicht bewegen. Hierdurch wird eine Kollision bzw. ein gefährliches Interagieren der beiden Elemente vermieden.

Im Sinne der Beschreibung umfasst der Begriff "Schneidelement" ein Element, mit dem ein zumindest teilweises Schneiden des Rohrs möglich ist. Insbesondere umfasst der Begriff "Schneidelement" eine Klinge. Das Material des Schneidelements ist für das Schneiden des Rohrs geeignet und aus der Materialauswahl aus Eisen, Stahl, Keramik, Titan, Kunststoff angepasst an das Material des Rohrs ausgewählt.

Der Begriff "zumindest abschnittsweise entlang des Umfangs geschnitten" umfasst die Möglichkeit, dass das Rohr vollständig oder teilweise entlang seines Umfangs geschnitten wird, um zwei Teile des Rohrs zu erhalten.

Die Erfindung schafft auch eine Verwendung einer Vorrichtung zum Einschieben eines Rohrs in einen länglichen Hohlraum. Bei der Vorrichtung werden mindestens zwei entlang einer Kurvenbahn bewegbare Rohrgreifer verwendet, die derart angeordnet und ausgestaltet sind, um das Rohr zumindest abschnittsweise zu umgreifen und im gegriffenen Zustand zumindest abschnittsweise gekrümmt zu bewegen.

Die vorstehenden Ausführungen stellen ebenso wie nachfolgende Beschreibung beispielhafter Ausführungsformen keinen Verzicht auf bestimmte Ausführungsformen oder Merkmale dar.

Die Erfindung wird im Folgenden beispielhaft anhand eines von in den Figuren dargestellten Ausführungsbeispielen näher erläutert.

In den Figuren wird zeigt:
- Fig. 1: eine Seitenansicht einer Vorrichtung zum Einschieben eines Rohrs in einen länglichen Hohlraum;
- Fig. 2: eine Seitenansicht einer Vorrichtung zum Einschieben eines Rohrs in einen länglichen Hohlraum, wie sie in einer Baugrube angeordnet ist, mit einem Rohr;
- Fig. 3: eine in einer Baugrube angeordneter Vorrichtung zum Einschieben eines Rohrs in einen länglichen Hohlraum in isometrischer Darstellung mit einem Rohr und weiteren Baugruben;
- Fig. 4: eine Draufsicht auf die Vorrichtung der Figur 2;
- Fig. 5: eine Vorrichtung zum Einschieben eines Rohrs in einen länglichen Hohlraum in isometrischer Darstellung;
- Fig. 6: einen Rohrgreifer in vergrößerter Darstellung;
- Fig. 7: eine vergrößerte Darstellung eines Kontakts eines Rohrgreifers mit einer Kurvenbahn; und
- Fig. 8: eine Vorrichtung zum Einschieben eines Rohrs in einen länglichen Hohlraum in isometrischer und vergrößerter Darstellung zusammen mit einem Schneidelement.

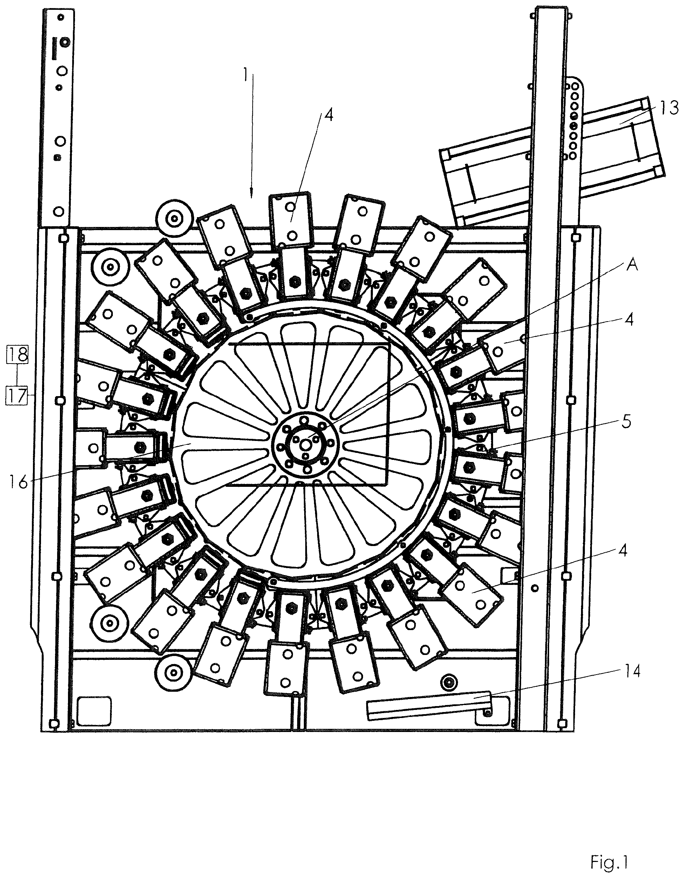

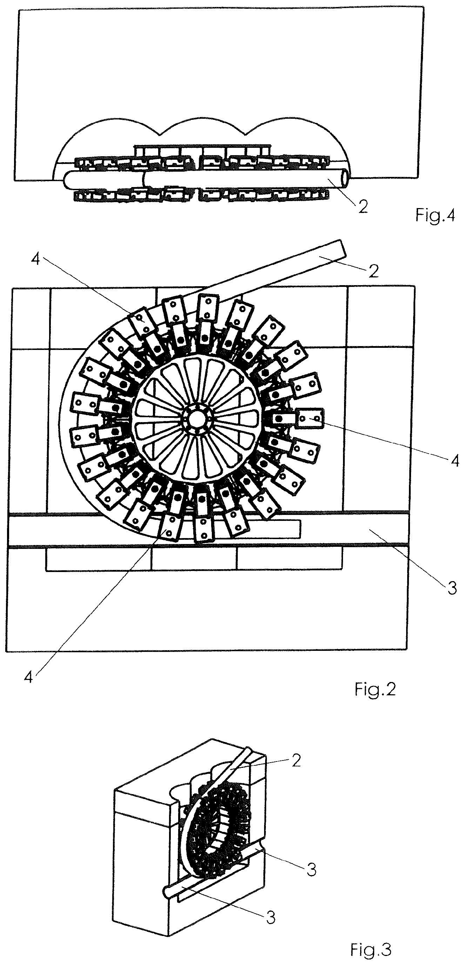

Figur 1 zeigt in einer Seitenansicht eine Vorrichtung 1 zum Einschieben eines Rohrs 2, welches in Figur 1 nicht dargestellt ist. Mittels der Vorrichtung 1 kann das Rohr 2 in einen länglichen Hohlraum 3 eingeschoben werden (vgl. Figuren 2 bis 4). Die Vorrichtung 1 weist 21 Rohrgreifer 4 auf. Die 21 Rohrgreifer 4 sind an einer Kurvenbahn 5, die einen kreisförmigen Umfang aufweist bzw. radförmig ausgestaltet ist, befestigt. Die Rohrgreifer 4 werden um eine Achse A, die als Mittelpunkt des kreisförmigen Umfangs bzw. des Rads im Raum liegt, mit der Kurvenbahn 5 bewegt. Die Rohrgreifer 4 beschreiben bei Ihrer Bewegung entlang der Kurvenbahn 5 im Wesentlichen einen Kreis. Die Rohrgreifer 4 laufen mit der Kurvenbahn 5 als Einschubrad 16 gegen den Uhrzeigersinn um.

Die Rohrgreifer 4 sind dabei gegenüber der Kurvenbahn 5 derart angeordnet und ausgestaltet, über einen Winkelbereich entlang der Kurvenbahn das Rohr 2 zumindest abschnittsweise zu umgreifen und im gegriffenen Zustand entlang einer Bahn zu bewegen.

In Figur 2 ist in einer Seitenansicht die Vorrichtung 1 zum Einschieben eines Rohrs 2 mit einem Rohr 2 gezeigt, wie es von der Vorrichtung 1 mittels der Rohrgreifer 4 gegriffen und in den länglichen Hohlraum 3 eingeschoben wird. Das Einschieben erfolgt dabei in der gewählten Darstellung in einer Richtung gegen den Uhrzeigersinn.

Betrachtet man die Figur 2, so läuft das Rohr 2 zunächst von oben rechts kommend in den Bereich der Vorrichtung 1 ein. Das Rohr 2 wird ab ungefähr 11 Uhr von den Rohrgreifern 4 gegriffen und die Rohrgreifer 4 in dem Winkelbereich bis ungefähr 6 Uhr greifen das Rohr 2, so dass ungefähr 10 Rohrgreifer 4 das Rohr 2 beim Einschieben in den Hohlraum 3 ständig umgreifen und bewegen.

Zum Einlaufen des Rohres 2 in die Rohrgreifer 4 befinden sich die Rohrgreifer 4 oben bei ungefähr 12 Uhr bis 11 Uhr in Offenstellung, so dass das Rohr 2 von oben kommend in die offenen Rohrgreifer 4 einlaufen kann.

Ab der Stellung 6 Uhr sind die Rohrgreifer 4 ebenfalls in Offenstellung, damit sich die Rohrgreifer 4 wieder gelöst vom Rohr 2 nach oben entlang der Kurvenbahn 5 bewegen können. Damit können alle Rohrgreifer 4 im Winkelbereich von ungefähr 6 Uhr bis ungefähr 11 Uhr in Offenstellung sein.

Der Figur 4 ist zu entnehmen, wie die Baugrube, in der die Einschubvorrichtung 1 angeordnet ist, im Wesentlichen entstanden ist. Es wurde die Keyhole-Technik genutzt, indem drei im Wesentlichen kreisrunde, einander überlappende Bohrungen senkrecht in das Erdreich eingebracht wurden. Jede einzelne kreisrunde Bohrung hat einen ungefähren Durchmesser von 0,6m. Es ergibt sich eine Baugrube, die im Wesentlichen ungefähr 1,6m lang ist.

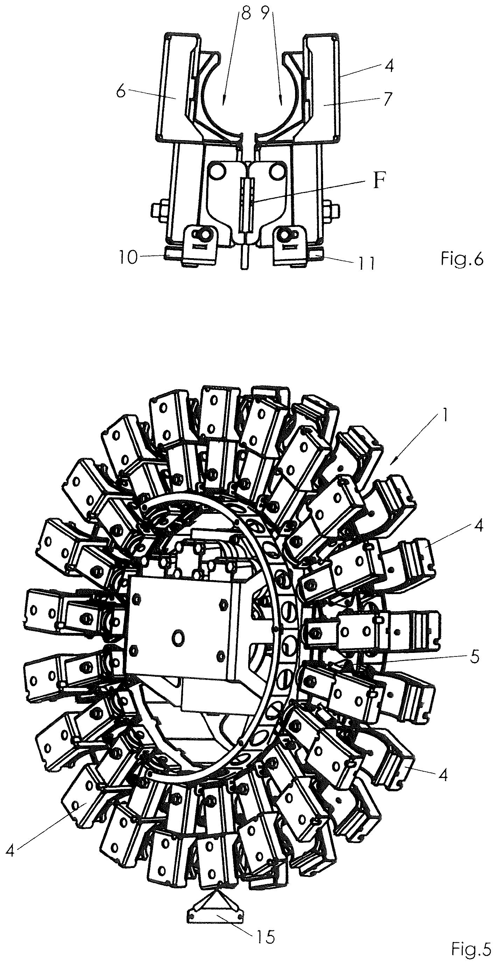

Die Figur 5 zeigt vereinfacht die Einschubvorrichtung 1 mit der Kurvenbahn 5, die mit den Rohrgreifern 4 zusammen im Raum als Einschubrad dreht. Die unterschiedliche Stellung der Rohrgreifer 4 zwischen Offen- und Schließstellung, ist dabei an dem endseitigen Abschnitt der Rohrgreifer 4 zu erkennen, der der Kurvenbahn 5 zugewandt ist.

Der Figur 6 ist zu entnehmen, dass der Rohrgreifer 4 federvorgespannt in seiner Schließstellung ist. In der hier dargestellten Ausführungsform weist der Rohrgreifer 4 zwei Klemmbacken 6, 7 auf, die symmetrisch geführt sind und mittels einer Feder F derart beaufschlagt sind, dass die Klemmbacken 6, 7 aufeinander zubewegt sind. In dieser Stellung kann ein zwischen den Klemmbacken 6, 7 befindliches Rohr 2 geklemmt bzw. bei einer Bewegung des Rohrgreifers 4 bewegt werden. Die Klemmbacken 6, 7 weisen jeweils eine Einformung 8, 9 auf, die dem Umfang und der Querschnittsform des Rohrs 2 entspricht. Zudem sind die Reibung zwischen dem Rohr 2 und den Klemmbacke 6, 7 erhöhende Maßnahmen vorgesehen und ein auf die Bereiche der Klemmbacke 6, 7 aufgebracht, die das Rohr 2 kontaktieren.

Werden die Rohrgreifer 4 im endseitigen, der Kurvenbahn zugewandten Bereich (fußseitigen Bereich) belastet, so dass sich die Klemmbacken 6, 7 gegen die Federkraft der Feder F voneinander weg bewegen können, so wird der Rohrgreifer 4 von seiner in der Figur 6 dargestellten Schließstellung in eine Offenstellung überführt. In der Offenstellung sind die beiden Klemmbacken 6, 7, die sich im kopfseitigen Bereich (abgewandt der Kurvenbahn 5) befinden voneinander weg bewegt.

Die Offenstellung wird bei dem in der Figur 5 dargestellten Ausführungsbeispiel dadurch erreicht, dass die beiden Klemmbacken 6, 7 jeweils eine Laufrolle 10, 11 aufweisen, mit der sie an einer Schaltfläche 12 bzw. Kontaktfläche, die fest im Raum angeordnet ist und gegenüber der sich die Rohrgreifer 4 bewegen, abrollen. Werden die Klemmbacken 6, 7 an ihrem der Kurvenbahn 5 zugewandten Ende zusammengedrückt, so wirkt diese Bewegung gegen die Federvorspannung und die Klemmbacken 6, 7 werden in eine Offenstellung bewegt, so dass das Rohr 2 in den Rohrgreifer 4 einlaufen kann bzw. der Rohrgreifer 4 das Rohr 2 freigibt.

Bei dem in den Figuren 5 bis 8 dargestellten Ausführungsform erfolgt eine rein mechanische Kopplung der Elemente derart, dass der Rohrgreifer 4 in Abhängigkeit von seiner Winkelstellung entlang der Kurvenbahn 5 in einer Schließ- oder einer Offenstellung ist. Dazu ist die Schaltfläche 12 entsprechend ausgestaltet.

Figur 1 zeigt zudem, dass die Einschubvorrichtung 1 eine Eingangsführung 13 und eine Ausgangsführung 14 aufweist. Die Eingangsführung 13 und die Ausgangsführung 14 unterstützen das Rohr 2. Die Eingangsführung 13 ist als Hülse ausgestaltet. Die Ausgangsführung 14 ist in Form einer Auflage für das Rohr 2 ausgestaltet.

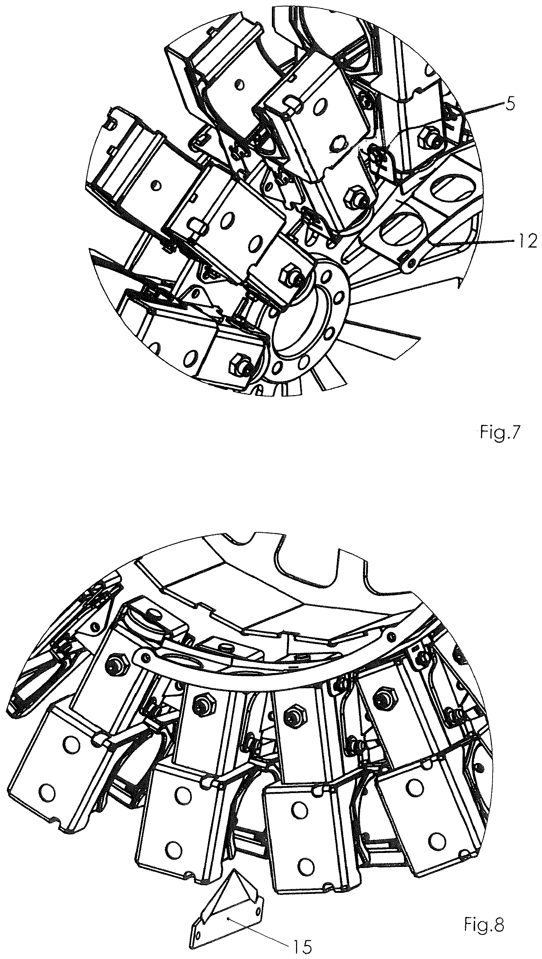

Die Figur 8 zeigt für das dargestellte Ausführungsbeispiel, dass im unteren Bereich der Vorrichtung 1 (ungefähr bei 6 Uhr) ein Schneidelement 15 vorhanden ist. Das Schneidelement 15 ist in Umfangsrichtung des Rohrs 2 entlang und/oder radial zur Kurvenbahn 5 bewegbar und kann an das Rohr 2 derart herangeführt werden, dass das Schneidelement 15 das Rohr 2 in Umfangsrichtung oder radial zur Kurvenbahn 5 bzw. quer zur Längsachse des Rohrs 2 schneidet. Das Schneidelement 15 führt dazu eine kreisförmige Bewegung entlang des Umfangs quer zur Einschieberichtung oder eine rein translatorische Bewegung durch. Dazu ist das Schneidelement 15 als spitze, dreiecksförmige Klinge ausgestaltet, die in das Rohr 2 einstechen und dieses bei einer Bewegung schneiden bzw. durchtrennen kann.

Als Antrieb für die Rohrgreifer 4, um mit der Kurvenbahn 5 zu bewegen, ist ein hydraulischer Antrieb 17 vorgesehen, mit dem die Kurvenbahn 5 verbunden ist. Die Kurvenbahn 5 bzw. das Einschubrad 16 wird um die Achse A quer zur Einschubrichtung gedreht und führt die Rohrgreifer 4 entlang dieser Kurvenbahn.

In der Figur 1 ist ebenfalls eine Steuerung 18 schematisch eingezeichnet, die den Antrieb 17 für die Kurvenbahn 5 bzw. das Einschubrad 16 steuert. Die Steuerung 18 ist auch für die Steuerung einer Bewegung des Schneidelements 15 ausgestaltet, wobei die Steuerung 18 überwacht, dass die Rohrgreifer 4 nicht gleichzeitig zur Bewegung des Schneidelements 15 umlaufen.

## Patentansprüche

1. Vorrichtung (1) zum Einschieben eines Rohrs (2) in einen länglichen Hohlraum (3), umfassend mindestens zwei entlang einer der Vorrichtung gehörenden Kurvenbahn (5) bewegbare Rohrgreifer (4), die derart angeordnet und ausgestaltet sind, das Rohr (2) zumindest abschnittsweise zu umgreifen und im gegriffenen Zustand zumindest abschnittsweise gekrümmt zu bewegen.

2. Vorrichtung (1) nach Anspruch 1, wobei der Rohrgreifer (4) mindestens eine Klemmbacke (6) aufweist, die relativ zu einem Gegenelement oder einer weiteren Klemmbacke (7) bewegbar ist und mittels der Bewegung der Rohrgreifer (4) entlang der Kurvenbahn (5) von einer Offenstellung, in der das Rohr (2) freigegeben ist, in eine Schließstellung, in der das Rohr (2) gegriffen ist, überführt wird.

3. Vorrichtung (1) nach Anspruch 2, wobei die relative Bewegung der Klemmbacke (6) zu dem Gegenelement bzw. der weiteren Klemmbacke (7) zwischen der Schließstellung und der Offenstellung im Wesentlichen quer zur Bewegung der Rohrgreifers (4) an der Kurvenbahn (5) gerichtet ist.

4. Vorrichtung (1) nach Anspruch 2 oder 3, wobei die Klemmbacke (6, 7) eine Einformung (8, 9) aufweist, die mit dem Außenumfang des Rohrs (2) korrespondiert.

5. Vorrichtung (1) nach einem der Ansprüche 1 bis 4, wobei der Rohrgreifer (4) mittels
a) Federvorspannung,
b) mechanischen Eingriffs,
c) Druckluft,
d) Hydraulik, und/oder
e) magnetischer Wechselwirkung
in Schließstellung vorgespannt ist.

6. Vorrichtung (1) nach einem der Ansprüche 1 bis 5, wobei die Offenstellung und die Schließstellung der Rohrgreifer (4) in Abhängigkeit von der Position an der Kurvenbahn (5) gewählt sind.

7. Vorrichtung (1) nach einem der Ansprüche 1 bis 6, wobei eine Kontaktfläche vorhanden ist, an der die Rohrgreifer (4) mit einer Laufrolle (10, 11) ablaufen, und mittels einer Interaktion der Laufrolle (10, 11) mit einer Ausgestaltung der Kontaktfläche der Rohrgreifer (4) von einer vorgespannten, insbesondere federvorgespannten, Schließstellung in eine Offenstellung gebracht wird.

8. Vorrichtung (1) nach einem der Ansprüche 1 bis 7, wobei die Kurvenbahn (5) geschlossen und zumindest abschnittsweise ellipsenförmig, kreisförmig oder polygonförmig ausgestaltet ist.

9. Vorrichtung (1) nach einem der Ansprüche 1 bis 8, wobei ein, insbesondere hydraulischer, Antrieb (17) vorhanden ist, der ausgestaltet ist, die Rohrgreifer (4) entlang der Kurvenbahn (5) zu bewegen.

10. Vorrichtung (1) nach einem der Ansprüche 1 bis 9, wobei eine Eingangsführung (13) und/oder Ausgangsführung (14) für das Rohr (2) vor bzw. hinter den Rohrgreifern (4) bezogen auf die Bewegungsrichtung vorhanden ist.

11. Vorrichtung (1) nach Anspruch 10, wobei die Eingangsführung (13) und/oder Ausgangsführung (14) gerade oder gekrümmt ausgestaltet ist.

12. Vorrichtung (1) nach einem der Ansprüche 1 bis 11, wobei ein Schneidelement (15) zwischen zwei benachbarten Rohrgreifern (4) der Kurvenbahn (5) derart bewegbar angeordnet ist, das Rohr (2) zumindest abschnittsweise zu schneiden, wobei insbesondere eine Steuerung (18) vorhanden ist, die eine Bewegung der Rohrgreifer (4) unterbindet, wenn das Schneidelement (15) bewegt wird und/oder insbesondere eine Steuerung (18) vorhanden ist, die eine Bewegung des Schneidelements (15) unterbindet, wenn die Rohrgreifer (4) bewegt werden.

13. Verwendung einer Vorrichtung (1) zum Einschieben eines Rohrs (2) in einen länglichen Hohlraum (3), wobei bei der Vorrichtung (1) mindestens zwei entlang einer der Vorrichtung gehörenden Kurvenbahn (5) bewegbare Rohrgreifer (4) verwendet werden, die derart angeordnet und ausgestaltet sind, um das Rohr (2) zumindest abschnittsweise zu umgreifen und im gegriffenen Zustand zumindest abschnittsweise gekrümmt zu bewegen.

## Claims

1. Device (1) for inserting a pipe (2) into an elongated hollow space (3), comprising at least two pipe grippers (4), movable along a curved track (5) belonging to the device, which are arranged and configured so as to grip round the pipe (2) at least in sections and to move the pipe in a curved manner in the gripped condition, at least in sections.

2. Device (1) according to Claim 1, wherein the pipe gripper (4) has at least one clamping jaw (6), which is movable relative to an opposite element or a further clamping jaw (7), and is transferred by means of the movement of the pipe grippers (4) along the curved track (5) from an open position in which the pipe (2) is released, to a closed position in which the pipe (2) is gripped.

3. Device (1) according to Claim 2, wherein the movement between the closed position and the open position of the clamping jaw (6) relative to the opposite element or further clamping jaw (7) is directed essentially across the movement of the pipe gripper (4) on the curved track (5).

4. Device (1) according to Claim 2 or 3, wherein the clamping jaw (6, 7) has a shape (8, 9) that corresponds to the outer circumference of the pipe (2).

5. Device (1) according to one of Claims 1 to 4, wherein the pipe gripper (4) is preloaded in the closed position by means of
a) spring loading,
b) mechanical intervention,
c) compressed air,
d) hydraulics, and/or
e) magnetic interaction.

6. Device (1) according to one of Claims 1 to 5, wherein the open position and the closed position of the pipe grippers (4) are selected depending on the position on the curved track (5).

7. Device (1) according to one of Claims 1 to 6, wherein a contact surface exists on which the pipe grippers (4) run with a running roller (10, 11), and the pipe gripper (4) is brought from a preloaded, in particular spring-loaded closed position to an open position by means of an interaction of the running roller (10, 11) with a configuration of the contact surface.

8. Device (1) according to one of Claims 1 to 7, wherein the curved track (5) is configured closed and ellipse-shaped, circular or polygon-shaped, at least in sections.

9. Device (1) according to one of Claims 1 to 8, wherein a, in particular hydraulic, drive (17) exists, which is configured to move the pipe grippers (4) along the curved track (5).

10. Device (1) according to one of Claims 1 to 9, wherein an input guide (13) and/or an output guide (14) exists for the pipe (2) in front of or behind the pipe grippers (4) with respect to the direction of movement.

11. Device (1) according to Claim 10, wherein the input guide (13) and/or the output guide (14) is configured straight or curved.

12. Device (1) according to one of Claims 1 to 11, wherein a cutting element (15) is moveably arranged between two adjacent pipe grippers (4) of the curved track (5) so as to cut the pipe (2) at least in sections, wherein in particular a control (18) exists, which prevents a movement of the pipe grippers (4) when the cutting element (15) is moved and/or in particular a control (18) exists, which prevents a movement of the cutting element (15) when the pipe grippers (4) are moved.

13. Use of a device (1) for inserting a pipe (2) into an elongated hollow space (3), wherein at least two pipe grippers (4), movable along a curved track (5) belonging to the device are used in the device (1), which are arranged and configured so as to grip round the pipe (2) at least in sections and to move the pipe in a curved manner in the gripped condition, at least in sections.

## Revendications

1. Dispositif (1) pour l'insertion d'un tube (2) dans une cavité allongée (3), comprenant au moins deux pinces à tube (4) mobiles le long d'une trajectoire courbe (5) appartenant au dispositif, qui sont disposées et configurées de manière à entourer le tube (2) au moins par sections et à le déplacer de manière incurvée au moins par sections à l'état saisi.

2. Dispositif (1) selon la revendication 1, dans lequel la pince à tube (4) présente au moins une mâchoire de serrage (6) qui est mobile par rapport à un élément antagoniste ou à une autre mâchoire de serrage (7) et qui, au moyen du mouvement des pinces à tube (4) le long de la trajectoire courbe (5), est transférée d'une position d'ouverture, dans laquelle le tube (2) est libéré, à une position de fermeture, dans laquelle le tube (2) est saisi.

3. Dispositif (1) selon la revendication 2, dans lequel le mouvement relatif de la mâchoire de serrage (6) par rapport à l'élément antagoniste ou à l'autre mâchoire de serrage (7) entre la position de fermeture et la position d'ouverture est dirigé essentiellement transversalement par rapport au mouvement de la pince à tube (4) sur la trajectoire courbe (5).

4. Dispositif (1) selon la revendication 2 ou 3, dans lequel la mâchoire de serrage (6, 7) présente une empreinte (8, 9) qui correspond à la périphérie extérieure du tube (2).

5. Dispositif (1) selon l'une des revendications 1 à 4, dans lequel la pince à tube (4) est précontrainte au moyen
a) d'une précontrainte du ressort,
b) d'une intervention mécanique,
c) d'air comprimé,
d) d'hydraulique, et/ou
e) d'une interaction magnétique
en position de fermeture.

6. Dispositif (1) selon l'une des revendications 1 à 5, dans lequel la position d'ouverture et la position de fermeture des pinces à tube (4) sont choisies en fonction de la position sur la trajectoire courbe (5).

7. Dispositif (1) selon l'une des revendications 1 à 6, dans lequel il existe une surface de contact sur laquelle les pinces à tube (4) se déplacent avec un galet de roulement (10, 11) et, au moyen d'une interaction du galet de roulement (10, 11) avec une configuration de la surface de contact, la pince à tube (4) est amenée d'une position de fermeture précontrainte, en particulier précontrainte par ressort, dans une position d'ouverture.

8. Dispositif (1) selon l'une des revendications 1 à 7, dans lequel la trajectoire courbe (5) est fermée et configurée au moins par sections en forme d'ellipse, de cercle ou de polygone.

9. Dispositif (1) selon l'une des revendications 1 à 8, dans lequel il existe un entraînement (17), notamment hydraulique, qui est configuré pour déplacer les pinces à tube (4) le long de la trajectoire courbe (5).

10. Dispositif (1) selon l'une des revendications 1 à 9, dans lequel un guide d'entrée (13) et/ou un guide de sortie (14) pour le tube (2) est présent en amont ou en aval des pinces à tube (4) par rapport à la direction de déplacement.

11. Dispositif (1) selon la revendication 10, dans lequel le guide d'entrée (13) et/ou le guide de sortie (14) est configuré de manière droite ou incurvée.

12. Dispositif (1) selon l'une des revendications 1 à 11, dans lequel un élément de coupe (15) est disposé de manière mobile entre deux pinces à tube (4) voisines de la trajectoire courbe (5) de manière à couper le tube (2) au moins par sections, dans lequel il existe notamment une commande (18) qui empêche un mouvement des pinces à tube (4) lorsque l'élément de coupe (15) est déplacé et/ou il existe notamment une commande (18) qui empêche un mouvement de l'élément de coupe (15) lorsque les pinces à tube (4) sont déplacées.

13. Utilisation d'un dispositif (1) pour l'insertion d'un tube (2) dans une cavité allongée (3), le dispositif (1) utilisant au moins deux pinces à tube (4) mobiles le long d'une trajectoire courbe (5) appartenant au dispositif, qui sont disposées et configurées de manière à entourer le tube (2) au moins par sections et à le déplacer de manière incurvée au moins par sections à l'état saisi.
